# EUROPEAN PATENT SPECIFICATION

(11) **EP 0 601 725 B1**
(45) Date of publication and mention of the grant of the patent: **29.10.1997**
(21) Application number: 93309260.3
(22) Date of filing: 22.11.1993
(51) Int. Cl.: C08L 93/04, C08J 5/02, C09J 175/04, C08G 18/80, C08G 18/28, C08G 18/10

(54) **Adhesion promoter compositions**
Adhäsionsverbessererzusammensetzungen
Compositions d'améliorateurs d'adhésion

(30) Priority: 25.11.1992 US 981886
(43) Date of publication of application: 15.06.1994
(73) Proprietor: LOCTITE CORPORATION, Hartford, Connecticut 06106 (US)
(72) Inventor: Dowling, Joseph P., Dublin 24 (IE); Hogan, Sarah C., Dublin 6W (IE)
(74) Representative: Marchant, James Ian

(56) References cited:
- DE-A- 2 214 206
- GB-A- 2 212 169
- US-A- 4 049 601

## Description

### BACKGROUND OF THE INVENTION

The present invention relates to compositions useful as adhesion promoters or primers for treating surfaces prior to bonding. In particular, these compositions contain interactive and/or compatible prepolymers and one or more adhesion promoters for improving initial adhesion and durability of the bond at the adhesive/substrate interface. The present compositions are preferably designed for use in conjunction with polyurethane adhesive compositions and have particularly enhanced adhesive promoting properties when used on metal surfaces.

Surface preparation of substrates prior to bonding is common and often required to achieve strong adhesive bonds. In addition to mechanical surface treatments, such as roughening the substrate surface, chemical treatments have been employed. These chemical treatments may modify the physical surface structure, such as by etching, anodizing or cleaning the surface, or may serve as coatings which provide a mutually compatible interface layer between the underlying substrate and the adhesive. These pre-treatment coatings serve the purpose of promoting the formation of physical and chemical intermolecular forces, thereby enhancing the strength of the adhesive bonds. For example, organosilicone compounds, either applied as a primer or incorporated into the adhesive per se, have been used to improve the strength and provide enhanced resistance to humid conditions. These adhesion promoters have been widely used in the manufacture of glass fiber-reinforced plastics to improve the adhesion between glass fibers and the matrix resin. For example, U.S. Patent No. 4,456,718 discloses organosilicon promoters having two or three alkoxy groups and a functional organic group. These adhesion promoters, which are conventionally employed in many current applications, have the general formula:

(RO)₃SiCH₂CH₂CH₂X

wherein R is C₁₋₄ alkyl and x is a functional organic group such as an amino, hydroxy, vinyl, methacrylate or epoxy group. The adhesion promotion properties imparted by these compounds is believed to be due to the chemical and physical reaction of the organosilicon compounds at the interface of substrate and polymer (adhesive). Other useful adhesion promoters well known in the art include organotitanates, organic chromium and zirconium complexes.

Known adhesion promoters include isocyanate-based products having a high content of isocyanate groups, as well as organofunctional silanes and siloxanes. These materials are generally highly reactive and require special care in their preparation and storage. Many non-ferrous metals such as aluminum, copper and zinc bichromate are difficult materials on which to achieve good adhesion both initially and during subsequent exposure to heat and humidity. These conventional adhesion promoters have only limited efficacy on non-ferrous metals or metals with modified surfaces.

Adhesion promoters have been used both in primer compositions, as well as directly in the adhesive formulations. For example, abietic acids and rosin esters have been disclosed as useful tackifiers in polyurethane pressure-sensitive adhesive compositions. U.S. Patent No. 4,037,392 discloses esters of rosin such as the pentaerythritol methyl ester, propyl ester, ethylene glycol and glycerol esters, as well as esters of hydroabietyl alcohol such as the benzoic and phthalic esters thereof, useful as tackifiers to achieve enhanced adhesion properties of polyurethane pressure-sensitive tapes.

More recently, U.S. Patent No. 5,207,069 discloses heat-activated adhesion promoters for treating surfaces prior to bonding. These promoters are applied directly to the surface, as opposed to incorporated in the adhesive composition, and include a solvent mixture of a carbonyl compound with at least one unsaturated activated bond and a polymer containing a functional group. Examples of useful carbonyl compounds disclosed include unsaturated dicarboxylic acids and esters thereof such as esters of maleic, crotonic and fumaric acids. Those polymers disclosed include materials having carboxylic, amine or hydroxy groups such as polyesters, polyamides, polyethers, polyacrylates and polyurethanes. The promoters require heat activation in order to achieve their intended function.

There is a need for an adhesion promoter designed especially for metallic surfaces which improves the adhesion characteristics of various adhesive systems without the use of heat or additional surface treatment, which is an effective under ambient conditions and which gives rise to enhanced adhesion durability under conditions of heat and humidity.

### SUMMARY OF THE INVENTION

The present invention is directed to an adhesion promoter composition for treating substrate surfaces, particularly metal, plastics, synthetic composites and wood, prior to bonding. For purposes of this invention, the terms "adhesion promoter" and "primer" will be used interchangeably and will have the same meaning. The present invention provides an adhesion promoter composition for improving adhesion of polyurethane-based adhesive compositions to substrate surfaces, said adhesion promoter comprising: (i) an ester selected from the group consisting of maleic-modified esters of rosin, dialkylmalonates and mixtures thereof; (ii) a polyisocyanate prepolymer which is both compatible and functionally reactive with the polyurethane-based adhesive and (iii) a suitable solvent unreactive to said prepolymer and ester. The maleic-modified ester of rosin component is preferably chosen from such materials as glycerol ester, pentaerythritol ester, ethylene glycol ester and mesitylene glycerol ester. The dialkyl malonates include the C₁₋₁₀ alkyl esters of malonic acid, such as methyl, ethyl and butyl malonates and mixtures thereof. Of particular usefulness is the combination of esters of rosin and the dialkylmalonate in the isocyanate-based solution. The primers of the present invention are especially designed for polyurethane adhesives and serve particularly well on metallic substrates. However, as will be discussed herein, the primers may be useful with other types of adhesives and on non-metallic substrates such as plastics, synthetic composites and wood.

The present invention also relates to a method of improving the adhesion of polyurethanes to metallic substrates as well as to naturally difficult to bond to substrates such as non-ferrous surfaces and plastic materials.

### DETAILED DESCRIPTION OF THE INVENTION

The adhesion promoter compositions of the present invention are preferably designed for use with polyurethane-based adhesive compositions. The prepolymer present in the adhesion promoter composition is chosen for its compatibility, physically or chemically, with the adhesive. Thus, in the case of polyurethane-based adhesives, the adhesion promoter composition contains a polyisocyanate prepolymer which is both compatible and functionally reactive with the polyurethane adhesive. It should be understood that the particular prepolymer used in the primer can be selected from a wide variety of materials which are compatible with and/or contain functional groups that are reactive with the adhesive employed.

Without wishing to be bound by any particular theory, the compositions are believed to provide enhanced adhesion through better surface wetting and formation of a chemical and/or mechanical bond to the substrate and adhesive.

The esters present in the adhesion promoter compositions are selected from the group consisting of maleic-modified esters of rosin, dialkylmalonates and mixtures thereof. The maleic-modified esters of rosin include the maleic-modified glycerol ester of rosin, maleic-modified pentaerythritol ester of rosin, ethylene glycol ester, mesitylene glycerol and mixtures thereof. The maleic-modified aspect of these esters appears to be significant in providing enhanced adhesion, as demonstrated in the Examples provided herein. For example, when similar esters of rosin are used which have not been maleic-modified, the adhesion to identical substrates drops significantly during exposure to heat and humidity conditions. This is in contrast to the maleic-modified esters of rosin, which maintain their adhesion for longer periods of heat and humidity exposure before a decrease in adhesion strength is initiated. In addition to the maleic-modified esters of rosin, dialkylmalonates are useful alone or in combination with the maleic-modified esters. Among the dialkylmalonate useful in the present invention include C₁₋₁₀ alkyl esters of malonic acid present invention include C₁₋₁₀ alkyl esters of malonic acid such as the methyl, ethyl and butyl malonates. Among the preferred dialkylmalonates is diethylmalonate.

The dialkylmalonates may be present in the present invention in amounts of about 0.1% to about 10% by weight and preferably about 0.2% to about 2% by weight of the composition.

Rosin is a complex mixture of organic substances generally produced by pine trees. After purification, it consists mainly of rosin acids which are predominately abietic acid and its isomers. Rosin and its derivatives are susceptible to oxidation by air, forming products which are not necessarily desirable. Hydrogenation is one known method of stabilizing these materials.

The structure for abietic acid and its hydrogenated forms are given below:

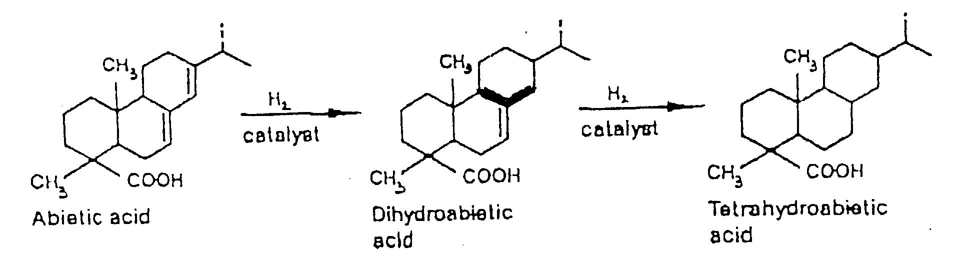

The preferred esters of rosin of the present invention are maleic-modified esters.

The rosin ester component of the present invention may be present in amounts of 5 to 20% by weight and preferably 10 to 15% by weight of the composition. These ranges are limited to some degree by the hygroscopic nature of these materials, which in amounts greater than 20% may cause stability problems. This range, however, may deviate where other ingredients are incorporated which will counteract such an effect.

It has been discovered that when dialkylmalonates are present in the composition in the absence of maleic-modified rosin esters, it is preferable to have a thickening agent present, such as a polyester resin. This is believed to be due to the need for sufficient solids content in the composition to be present to obtain a substantially continuous film. Significant gaps in the film continuity may result in a loss of adhesion.

It should be understood that the polyisocyanate prepolymer used in the preferred embodiment of the present invention may be chosen from aromatic or aliphatic polyisocyanate prepolymers conventionally used in the art. For example, such prepolymers include the reaction of diisocyanates such as 4,4'-diphenylmethane diisocyanate (MDI), toluene diisocyanate (TDI), 1,6-hexamethylene diisocyanate (HDI) or isophorone diisocyanate (IPDI) with polyesterpolyols or polyetherpolyols of molecular weight of about 200 to about 2000, e.g., those sold under the tradename Desmophen by Bayer AG. The prepolymers may be present in the inventive compositions in amounts of about 2% to about 40% and preferably about 10% to about 20% by weight of the composition. These prepolymers have a molecular weight and the range of about 500 to about 10,000.

The solvent carrier for the inventive compositions may be selected from any suitable solvent which is unreactive with the prepolymer and the ester components. In the case of isocyanate prepolymers, the solvent should be aprotic. Examples of such solvents are ketones, esters and hydrocarbons. The solvent allows for an intimate solution of ester and prepolymer to be formed which when deposited on the substrate allows for proper surface wetting, uniformity and continuity in coating. The solvent chosen should be sufficiently volatile such that it evaporates or otherwise substantially flashes off in a relatively short time subsequent to deposition, its purpose as a carrier for the ester and prepolymer components being completed. Low molecular weight, low boiling point solvents are therefore preferred. For example, solvents having a maximum molecular weight of about 200 and a maximum boiling point of about 150°C are useful. It is also preferred that the solvents chosen be capable of substantially evaporating under ambient conditions within a time period of about ten (10) minutes or less. Specific examples of suitable solvents include ethylacetate, n-propylacetate, hexane, toluene, xylene and butan-2-one. The solvent should be used in amounts sufficient to allow for deposition of a continuous coating on the substrate such that enhanced adhesion can be obtained. Preferably, the solvent is present in amounts of about 50% to about 80% by weight of a composition.

It has been determined that the composition best exhibits the enhanced adhesion results on a variety of substrates when it is present as a substantially continuous film on the substrate. Thus, the composition must be capable of forming a substantially continuous film on the substrate surface once the solvent carrier has evaporated. Towards this end, the solids content of the composition should be sufficient to accomplish such a film. In most cases, the continuity of the film is easily observed by its color or textural characteristics. The film should be present on the entire surface area to be bonded to achieve maximum adhesion results.

The compositions of the present invention may be used on a variety of different surfaces. Steel, aluminum, copper and zinc bichromate are among those metallic surfaces on which enhanced adhesion may be obtained using the present compositions. In addition, the present invention may be used on naturally difficult to bond to substrates such as non-ferrous materials, plastic and wood.

The polyurethane adhesives useful in conjunction with the preferred embodiment of the present invention may be chosen from any of those known in the art. Both one-part polyurethane adhesives and two-part polyurethane adhesives are useful. Polyurethanes are generally formed by the reaction of a diisocyanate with a polyol. This reaction is generally a step-growth polymerization and is often referred to as a polyaddition or rearrangement polymerization. Examples of polyurethane compositions useful in the present invention include those which are made from the reaction of diisocyanates such as 4,4'-diphenylmethane diisocyanate (MDI), toluene diisocyanate (TDI), 1,6-hexamethylene diisocyanate (HDI) or isophorone diisocyanate (IPDI) with polyesterpolyols or polyetherpolyols of molecular weight of about 200 to about 2000, e.g. those sold under the tradename Desmophen by Bayer AG.

The present invention also provides a method of enhancing adhesion of polyurethane-based adhesive compositions to a substrate ccmprising the step of applying adhesion promoter composition to said substrate surface prior to application of said polyurethane adhesive, said adhesion promoter composition comprising (i) and ester selected from the group consisting of maleic-modified esters of rosin, dialkylmalonates and mixtures thereof; (ii) a polyisocyanate prepolymer which is both compatible and functionally reactive with the polyurethane base adhesive; and (iii) a solvent carrier unreactive to said prepolymer and ester components. The present invention also relates to a new use for compositions containing maleic-modified esters of rosin, dialkylmalonates and polyisocyanate prepolymer compositions.

The present invention also provides articles having at least one metallic, thermoplastic or wood surface conditioned for enhanced adhesion to polyurethane-based adhesives. Said surface having applied thereto a surface-conditioning composition comprising: (i) a material selected from maleic-modified esters of rosin, dialkylmalonates or mixtures thereof; and (ii) a polyisocyanate prepolymer which is both compatible and functionally reactive with the polyurethane-based adhesive. Application of the adhesion promoter composition to the substrate surface may be effectuated by dipping, brushing, spraying or other deposition means for providing an adequate coating to the area to be bonded.

The present invention can be combined with a variety of other materials including other adhesion promoters such as silanes and may also contain compounds useful in the acceleration or initiation of adhesive cure.

As previously mentioned, the present invention can be varied in the number of ways to allow for use with a variety of pclyurethane-based adhesive systems. In doing so, the particular prepolymer chosen must be suitable, i.e. compatible with and/or functionally reactive with the polyurethane-based adhesive. Thus, the prepolymer component is intended to have affinity for and provide a "link" to specific adhesive classes.

The invention may be further understood with reference to the following non-limiting examples. Unless otherwise indicated, tensile strength results of 4.0 N/mm² or higher using polyurethane adhesive Loctite 3951 indicate cohesive failure, i.e. failure within the adhesive. Results lower than this usually indicated adhesive failure, i.e. failure at the adhesive/substrate interface.

### EXAMPLE 1

The following inventive adhesion promotion composition was prepared in accordance with the present invention.

| **COMPOSITION A** | |
|---|---|
| Component | Parts by Weight |
| Butan-2-one (solvent) | 61.0 |
| Maleic-modified glycerol ester of rosin | 15.0 |
| P-toluene-sulfonyl-isocyanide | 0.5 |
| Diethylmalonate | 0.5 |
| Aliphatic polyisocyanate¹ | 18.5 |
| Silane² | 4.5 |

| | |
|---|---|
| ¹ 65% aliphatic polyisocyanate prepolymer in solvent naphtha 100/1-methoxypropylacetate-2, 4:1 (Bayer AG). | |
| ² γ-glycidoxypropyl trimethoxy silane (Union Carbide). | |

This composition was formed by admixing each of the components together to form a homogenous solution. Standard lapshear specimens having a bond area of 1'' (2.54 cm) x 0.5'' (1.27 cm) and a bond gap of about 3mm (ASTM D 1002 modified) were made from mild steel, zinc bichromate and aluminum and their bonding surfaces coated with inventive composition A. Equivalent lapshear specimens were primed with three commercially available adhesion promoter compositions designed for use with polyurethane adhesives. A set of control lapshear specimens were used without primer.

The competitive metal primers used had the following compositions:
- Sika 210T:: Bisphenol A Epoxy in xylene/methanol/ethylacetate solvent mixture.
- Sika 204:: Polyvinylbutyral-phenolic resin combination and 0.1% zinc chromate in isopropanol.
- Teroson 102:: 1% polyether in ethanol.

The lapshear specimens prepared above were tested for tensile strength in accordance with ASTM D1002/DIN 53283. The adhesive used in each test was a one-part polyurethane elastomeric adhesive designed to cure at ambient temperature under the influence of atmospheric moisture. This polyurethane adhesive is sold under the tradename Loctite 3951 by Loctite Corporation, Hartford, CT. The results are summarized in Table I.

The lapshear specimens were placed in controlled heat and humidity conditions for up to six weeks, as indicated, prior to tensile testing. Tensile testing was performed at room temperature using an Instron Testing Machine Nos. 1185 and 4507.

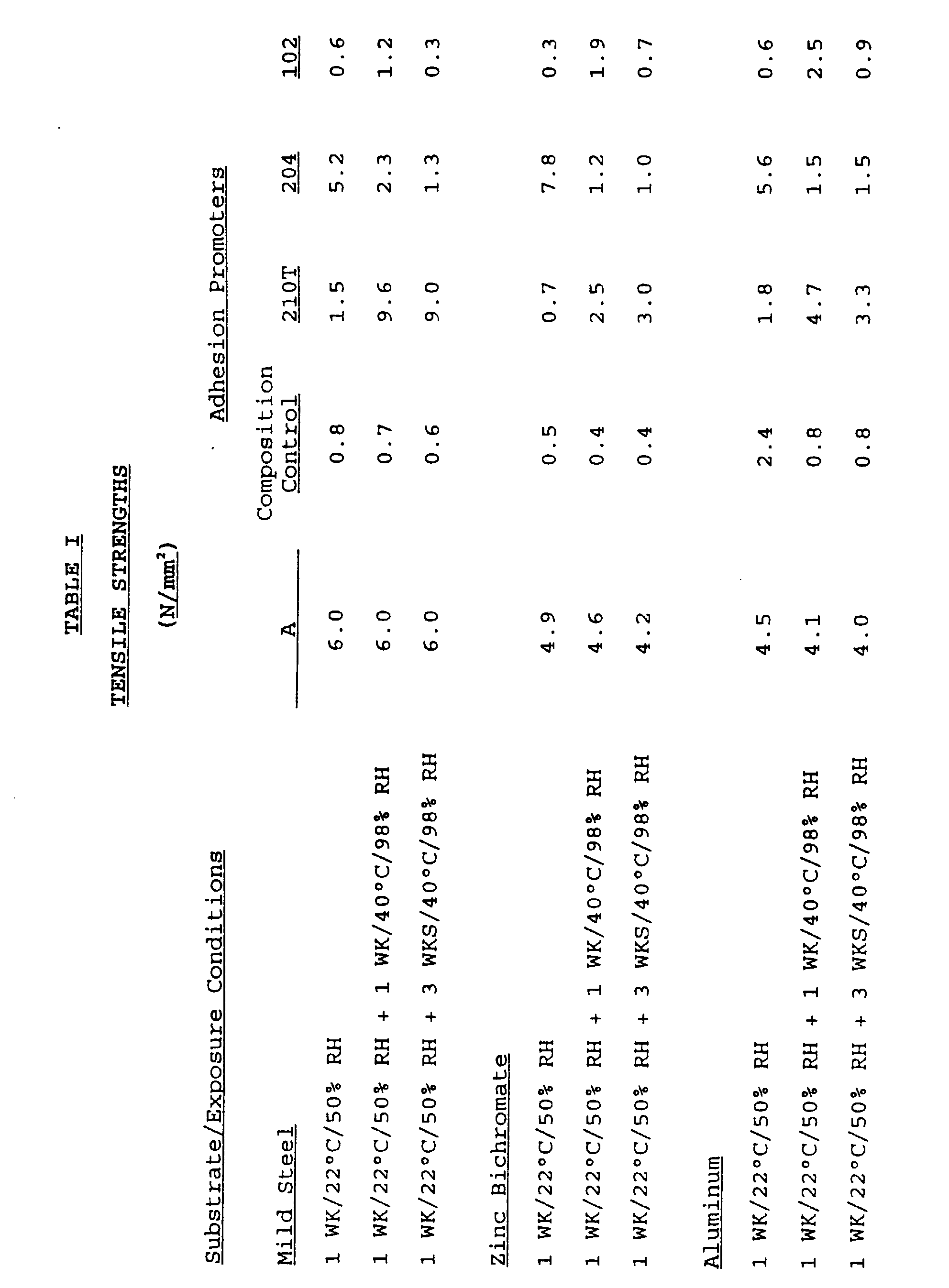

As is apparent from the results on Table I, the inventive adhesion promoter compositions exhibited tensile strengths which were extremely durable throughout the heat/humidity exposure periods on all three metal surfaces. Of particular significance is the retention of adhesive properties on zinc bichromate and aluminum as compared to the control and the commercially available primers. This is an indication of adhesive durability and the ability to prevent moisture from penetrating the adhesive/substrate interface, thereby weakening the bond.

### EXAMPLE 2

The following comparative and inventive adhesion promoter compositions were prepared in accordance with the invention. Composition B is devoid of adhesion promoter, whereas compositions C and D contain diethylmalonate and are representative of the inventive compositions.

| | Compositions | | |
|---|---|---|---|
| | (Parts by Weight) | | |
| Component | B | C | D |
| Butan-2-one (Solvent) | 65.00 | 65.00 | 65.00 |
| Saturated polyester resin³ | 10.69 | 10.69 | 10.69 |
| Diethylmalonate | -- | 0.50 | 2.50 |
| Aliphatic polyisocyanate¹ | 24.44 | 24.44 | 24.44 |
| Silane² | 2.00 | 2.00 | 2.00 |

| | | | |
|---|---|---|---|
| ¹ 65% aliphatic polycocyanate prepolymer in solvent napha 100/1-methoxypropylacetate-2, 4:1 (Bayer AG). | | | |
| ² γ-glycidoxypropyl trimethoxy silane (Union Carbide). | | | |
| ³ Dynapol L206 (Hüls) | | | |

Lapshears were prepared and tested in the same manner and using the same polyurethane adhesive composition as in Example 1. The results, tabulated in Table II, further indicate the ability of the inventive primer compositions to provide enhanced adhesion under extended conditions of heat and humidity.

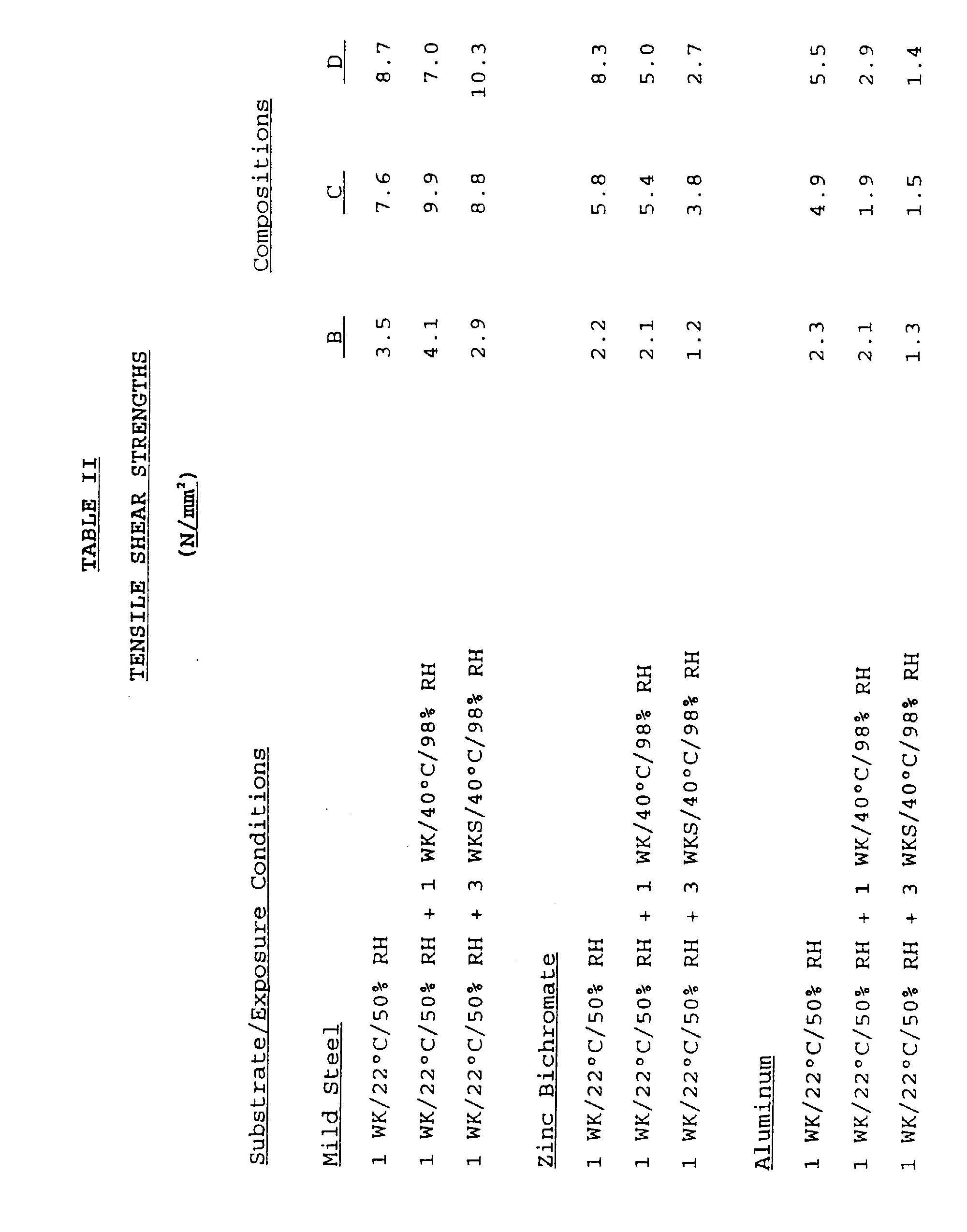

### EXAMPLE 3

The following inventive compositions E and G as well as comparative composition F were prepared:

| | Compositions | | |
|---|---|---|---|
| | (Parts by Weight) | | |
| Component | E | F | G |
| Butan-2-one (Solvent) | 60.51 | 65.00 | 65.01 |
| Saturated polyester resin³ | -- | 10.69 | -- |
| Maleic-modified glycerol ester of rosin | -- | -- | 10.02 |
| Diethylmalonate | 0.50 | -- | -- |
| Aliphatic polyisocyanate¹ | 35.03 | 24.44 | 20.02 |
| Silane² | 4.01 | 2.00 | 4.51 |

| | | | |
|---|---|---|---|
| ¹ 65% aliphatic polyisocyanate prepolymer in solvent naphtha 100/1-methoxypropylacetate-2, 4:1 (Bayer AG). | | | |
| ² γ-glycidoxypropyl trimethoxy silane (Union Carbide). | | | |
| ³ Dynapol L206 (Hüls) | | | |

Lapshears were again prepared and tested in the same manner and using the same polyurethane adhesive as in Example I. The results, set forth in Table III, demonstrates the effectiveness of the inventive compositions in providing enhanced adhesion and adhesion durability under extended conditions of heat and humidity. It should be noted that the lower results of Composition E are attributed to the low viscosity of the composition due to the absence of sufficient film-forming solids, i.e. polyester resin, such that a substantially continuous film was not formed.

Composition F is a comparative composition without the use of the esters of rosin or malonic acid, but containing polyester resin solids.

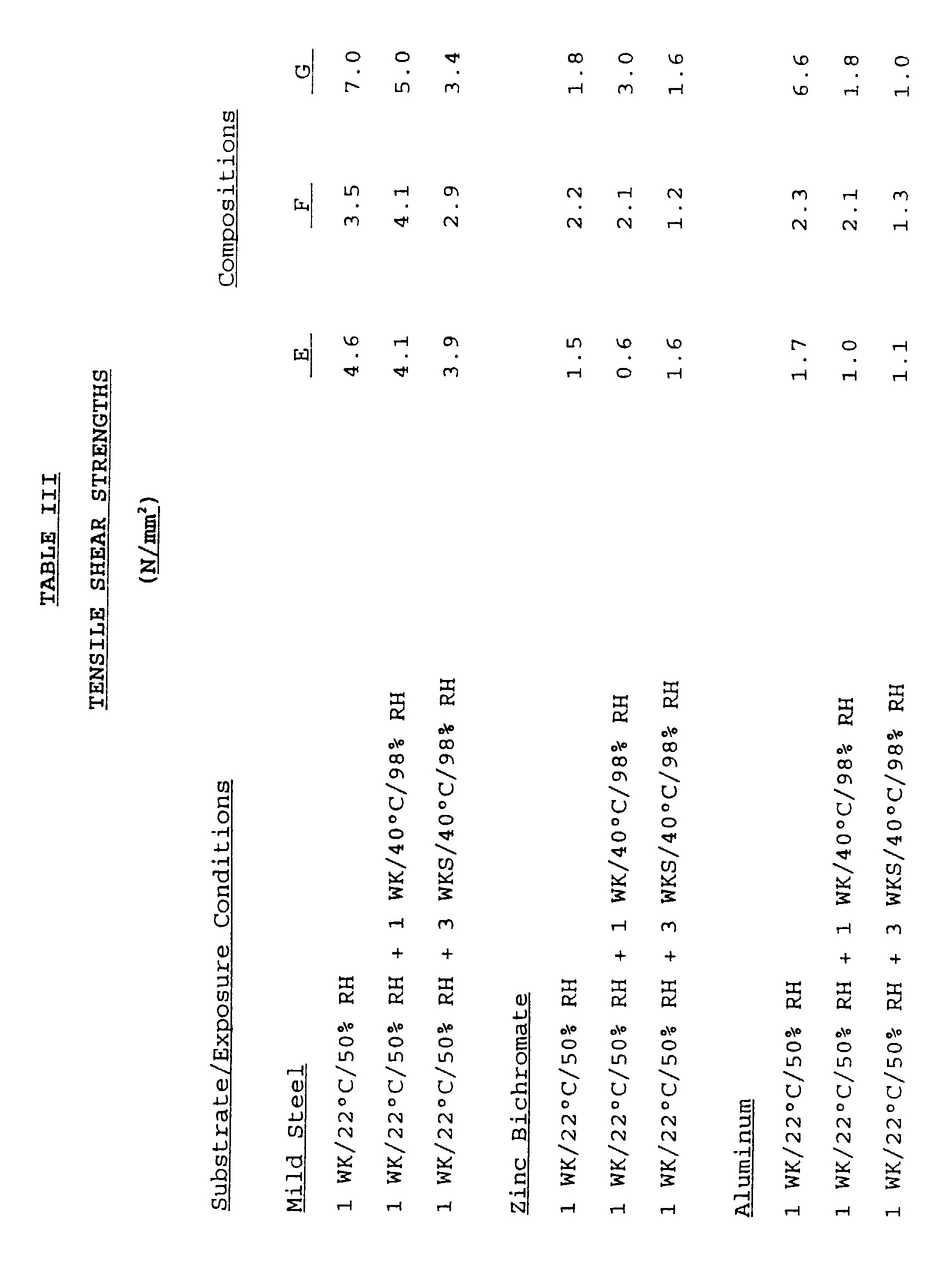

### EXAMPLE 4

The following compositions were prepared to demonstrate the enhanced adhesion properties of compositions containing the maleic-modified glycerol esters of rosin as compared with non-maleic-modified esters of rosin. The non-maleic-modified esters of rosin were polymerized rosins marketed by Hercules Inc. and Hercules B.V. under the tradenames Dymerex and Pentalyn C.

| | Compositions | | | |
|---|---|---|---|---|
| | (Parts by Weight) | | | |
| Component | J | K | L | M |
| Butan-2-one (Solvent) | 52.3 | 52.3 | 52.3 | 52.3 |
| Maleic-modified glycerol ester of rosin | 14.3 | -- | -- | -- |
| Polymerized rosin (predominately dimeric acids derived from rosin)¹ | -- | 14.3 | -- | -- |
| Pentaerythritol ester of polymerized rosin² | -- | -- | 14.3 | -- |
| Maleic-modified pentaerythritol ester of rosin³ | -- | -- | -- | 14.3 |
| Aliphatic polyisocyanate prepolymer⁴ | 28.5 | 28.5 | 28.5 | 28.5 |
| Plasticizer⁵ | 2.4 | 2.4 | 2.4 | 2.4 |
| Silane⁶ | 2.4 | 2.4 | 2.4 | 2.4 |

| | | | | |
|---|---|---|---|---|
| ¹ Sold by Hercules, Inc. under the tradename Dymerex. | | | | |
| ² Sold by Hercules, Inc., BV under the tradename Pentalyn C. | | | | |
| ³ Sold by Hercules, Inc., BV under the tradename Pentalyn G. | | | | |
| ⁴ 65% aliphatic polyisocyanate prepolymer in solvent naphtha 100/1-methoxypropylacetate-2, 4:1 (Bayer AG) | | | | |
| ⁵ Alkyl sulfonic acid ester of phenol (Tradename Mesamoll, Bayer AG). | | | | |
| ⁶ γ-glycidoxypropyl trimethoxy silane. | | | | |

Lapshear specimens were prepared and tested in the same manner and using the same polyurethane adhesive compositions as Example 1. The results, tabulated in Table V, indicate that non-maleic-modified esters of rosin (Compositions K, L) do not provide the enhanced adhesion as compared to the inventive compositions (J, M) on each of the different metallic substrates.

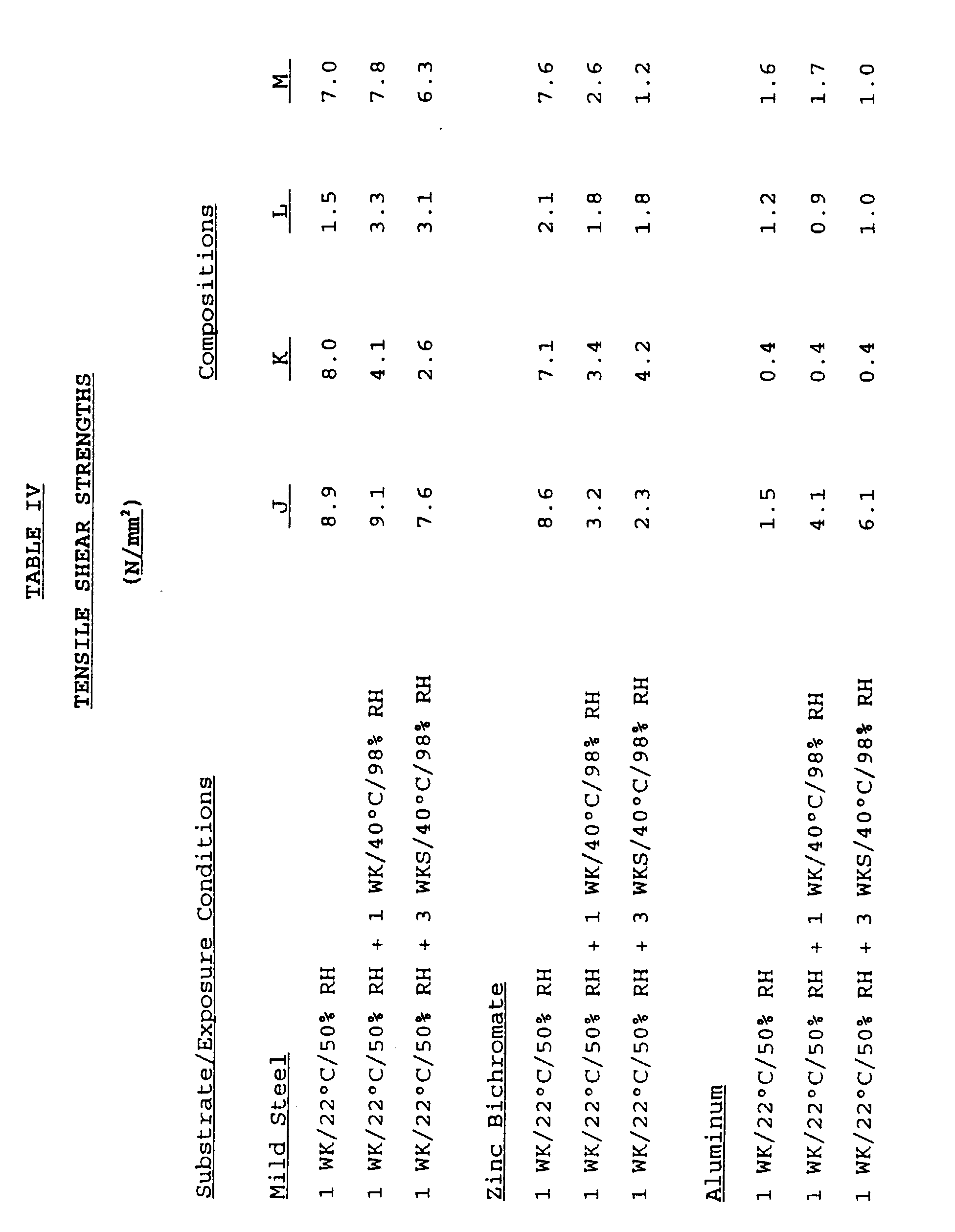

### EXAMPLE 5

Inventive Composition A was used to prepare lapshear specimens made from various metallic substrates following the same procedure and using the same polyurethane adhesive as in Example 1. The results, shown in Table V, emphasize the excellent adhesion durability on metallic surfaces such as copper, stainless steel and mild steel, where only a minimal amount of tensile bond strength is lost even after extended periods of heat and humidity. In the case of mild steel, additional extended exposures at 80°C and 100°C subsequent to humidity exposure still demonstrated excellent durability of adhesion.

**TABLE V**

| **TENSILE SHEAR STRENGTHS (N/mm**^{**2**}**)** | | |
|---|---|---|
| Substrate/Exposure Conditions | Copper | Stainless Steel |
| 1 WK/22°C/50% RH | 5.2 | 2.2 |
| 1 WK/22°C/50% RH + 1 WK/40°C/98% RH | 5.1 | 2.4 |
| 1 WK/22°C/50% RH + 3 WKS/40°C/98% RH | 5.2 | 2.4 |
| 1 WK/22°C/50% RH + 4 WKS/40°C/98% RH | 4.6 | 1.0 |
| | Mild Steel | |
| 1 WK/22°C/50% RH | 6.0 | |
| 1 WK/22°C/50% RH + 1 WK/80°C | 11.0 | |
| 1 WK/22°C/50% RH + 3 WKS/80°C | 10.7 | |
| 1 WK/22°C/50% RH + 6 WKS/80°C | 8.1 | |
| | | |
| 1 WK/22°C/50% RH + 1 WK/100°C | 8.6 | |
| 1 WK/22°C/50% RH + 3 WKS/100°C | 6.1 | |
| 1 WK/22°C/50% RH + 6 WKS/100°C | 4.7 | |

### EXAMPLE 6

This example is intended to demonstrate the usefulness and durability of adhesion obtained from compositions of the present invention when used on a variety of different surfaces, including plastics, composites, wood and enamel coated steel as compared to lapshear joints made without primer. Inventive Composition A was used on lapshears made from each of the listed materials and prepared and tested in accordance with Example 1. The tensile shear results, shown in Table VI, clearly demonstrate that the inventive primer compositions provided enhanced adhesion and durability under extended exposures to heat and humidity when compared to those specimens on which primer was not used (Table VII).

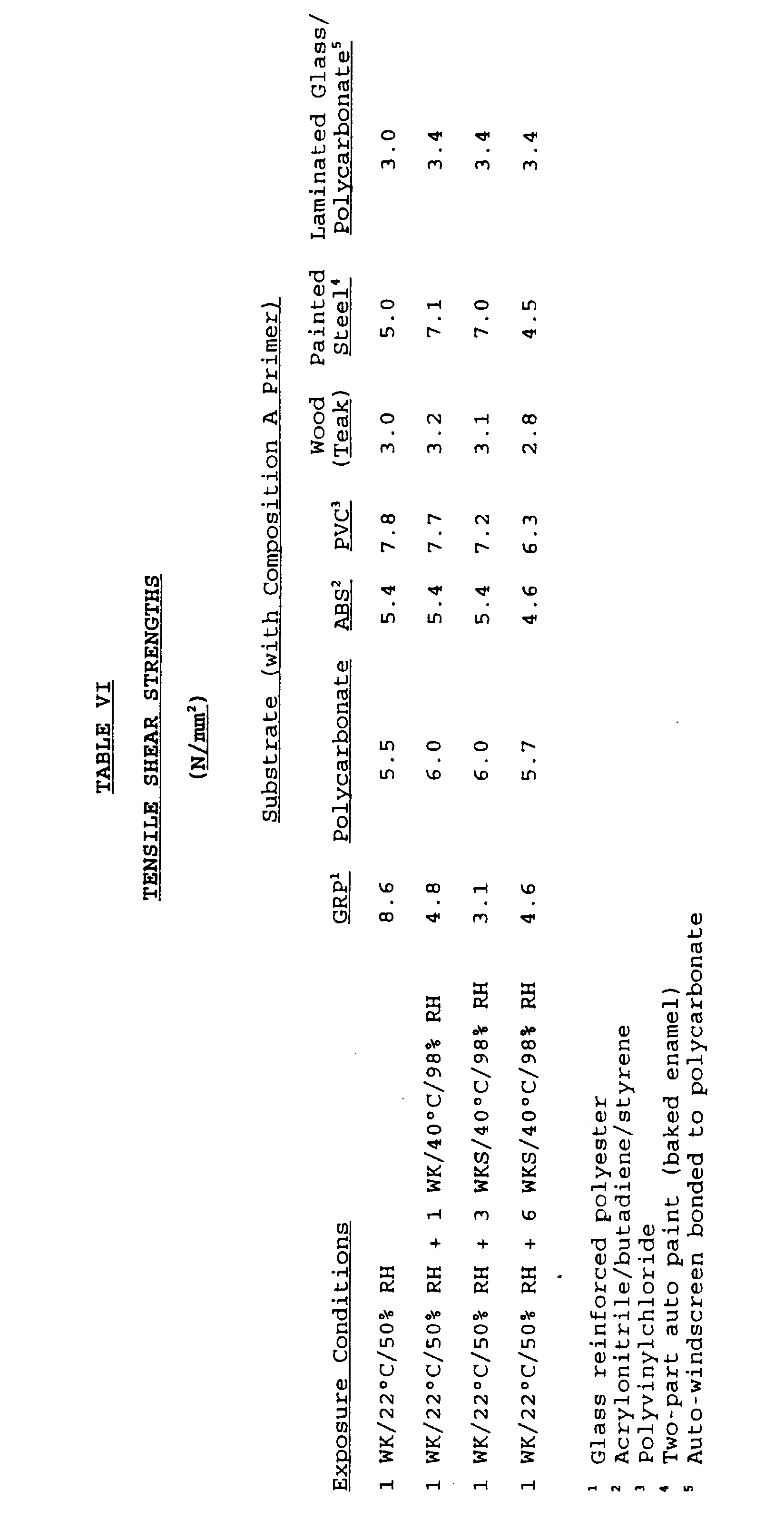

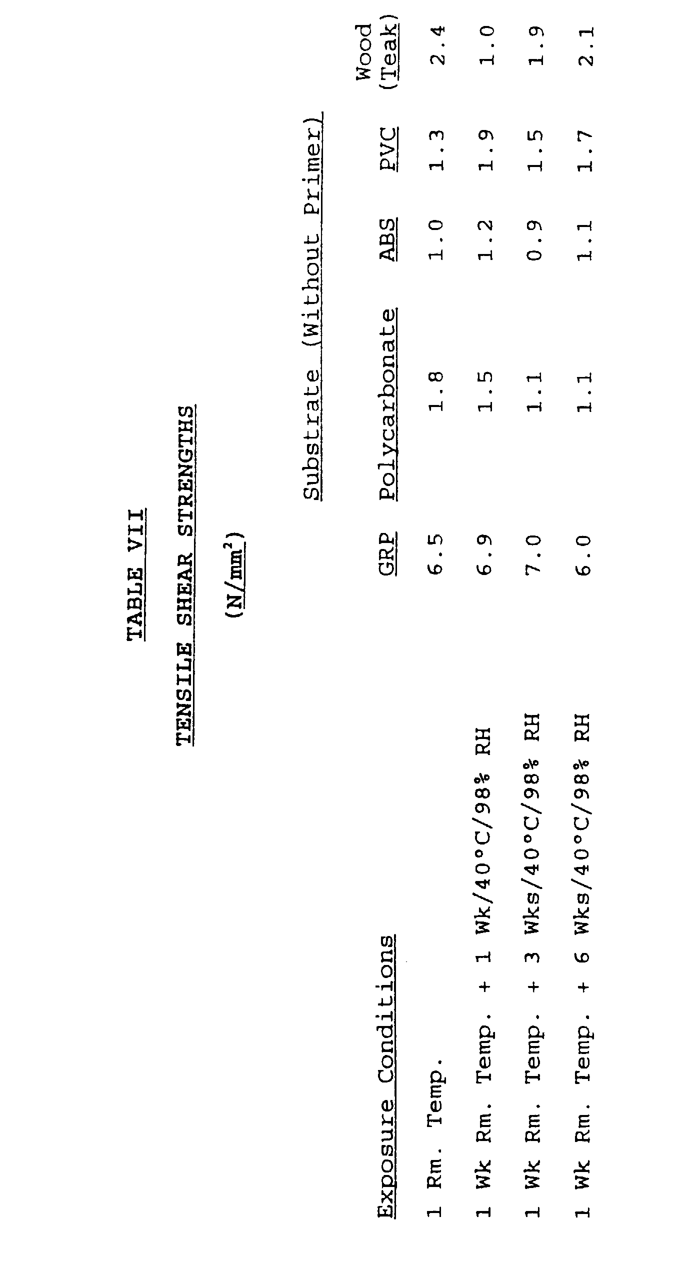

## Claims

1. An adhesion promoter composition for improving adhesion of polyurethane-based adhesive compositions to substrate surfaces, said adhesion promoter comprising:
i) an ester selected from maleic-modified esters of rosin, dialkylmalonates or mixtures thereof;
ii) a polyisocyanate prepolymer which is both compatible and functionally reactive with the polyurethane-based adhesive; and
iii) a solvent carrier unreactive to said prepolymer and ester.

2. The composition as claimed in claim 1 characterised in that the rosin ester is selected from maleic-modified glycerol ester of rosin, maleic-modified pentaerythritol ester of rosin, maleic-modified ethylene glycol ester of rosin, maleic-modified mesitylene glycerol ester of rosin or mixtures thereof.

3. The composition as claimed in claim 1 or 2 characterised in that the rosin esters are present in amounts of 5% to 20% by weight.

4. The composition as claimed in any of claims 1 to 3 characterised in that dialkylmalonates are selected from C₁₋₁₀ alkyl esters of malonic acid.

5. The composition as claimed in any of claims 1 to 4 characterised in that dialkylmalonate is present in amounts of 0.1% to 10% by weight.

6. The composition as claimed in claim 5 characterised in that the dialkylmalonate is diethylmalonate.

7. The composition as claimed in any to claims 1 to 6 characterised in that the polyisocyanate prepolymer has a molecular weight in the range of 500 to 10,000.

8. The composition as claimed in any of claims 1 to 7 characterised in that the solvent is aprotic.

9. The composition as claimed in claim 8 characterised in that the solvent is a ketone, ester or hydrocarbon.

10. The composition as claimed in any of claims 1 to 9 characterised in that it is substantially free from water.

11. An article having at least one metallic, thermoplastic or wood surface conditioned for enhanced adhesion to polyurethane-based adhesives said surface having applied thereto a surface-conditioning composition comprising:
i) a material selected from maleic-modified esters of rosin, dialkylmalonates or mixtures thereof; and
ii) a polyisocyanate prepolymer which is both compatible and functionally reactive with the polyurethane-based adhesive.

12. The article as claimed in claim 11 characterised in that the maleic-modified esters of rosin are selected from maleic-modified glycerol ester of rosin maleic-modified pentaerythritol ester of rosin, maleic-modified ethylene glycol ester of rosin, maleic-modified mesitylene glycerol ester of rosin or mixtures thereof.

13. The article as claimed in claim 11 or 12 characterised in that dialkylmalonates are selected from C₁₋₁₀ alkyl esters of malonic acid.

14. The article as claimed in any of claims 11 to 13 characterised in that the dialkylmalonate is diethylmalonate.

15. The article as claimed in any of claims 11 to 14 characterised in that the surface conditioning composition comprises 5-20 parts by weight of a maleic-modified ester of rosin and 2-40 parts by weight of the polyisocyanate prepolymer.

16. The article as claimed in any of claims 11 to 15 characterised in that the surface conditioning composition comprises 0.1-10 parts by weight of a dialkylmalonate and 2-40 parts by weight of the polyisocyanate prepolymer.

17. A method of enhancing adhesion of polyurethane-based adhesive compositions to a substrate comprising the step of applying an adhesion promoter composition to said substrate surface prior to application of said polyurethane adhesive, said adhesion promoter composition comprising:
i) an ester selected from maleic-modified esters of rosin, dialkylmalonates or mixtures thereof;
ii) a polyisocyanate prepolymer which is both compatible and functionally reactive with the polyurethane-based adhesive; and
iii) a solvent carrier unreactive to said prepolymer and ester.

## Patentansprüche

1. Haftvermittlerzusammensetzung zur Verbesserung der Haftung von Polyurethanbasis-Klebstoffzusammensetzungen an Substratoberflächen, wobei der Haftvermittler umfaßt:
i) einen Ester, ausgewählt aus Maleinsäure-modifizierten Estern von Kolophonium, Dialkylmalonaten oder aus Gemischen davon;
ii) ein Polyisocyanat-Prepolymer, das mit dem Polyurethanbasis-Klebstoff sowohl kompatibel als auch funktionell reaktiv ist; und
iii) einen Lösungsmittelträger, der gegenüber dem Prepolymer und dem Ester unreaktiv ist.

2. Zusammensetzung nach Anspruch 1, dadurch gekennzeichnet, daß der Kolophoniumester ausgewählt ist aus Maleinsäure-modifiziertem Glycerinester von Kolophonium, Maleinsäure-modifiziertem Pentaerythritester von Kolophonium, Maleinsäure-modifiziertem Ethylenglycolester von Kolophonium, Maleinsäure-modifiziertem Mesitylenglycerinester von Kolophonium oder aus Gemischen davon.

3. Zusammensetzung nach Anspruch 1 oder 2, dadurch gekennzeichnet, daß die Kolophoniumester in Mengen von 5 Gew.-% bis 20 Gew.-% vorhanden sind.

4. Zusammensetzung nach irgendeinem der Ansprüche 1 bis 3, dadurch gekennzeichnet, daß die Dialkylmalonate aus den C₁-C₁₀-Alkylestern der Malonsäure ausgewählt sind.

5. Zusammensetzung nach irgendeinem der Ansprüche 1 bis 4, dadurch gekennzeichnet, daß Dialkylmalonat in Mengen von 0,1 Gew.-% bis 10 Gew.-% vorhanden ist.

6. Zusammensetzung nach Anspruch 5, dadurch gekennzeichnet, daß das Dialkylmalonat Diethylmalonat ist.

7. Zusammensetzung nach irgendeinem der Ansprüche 1 bis 6, dadurch gekennzeichnet, daß das Polyisocyanat-Prepolymer ein Molekulargewicht im Bereich von 500 bis 10 000 besitzt.

8. Zusammensetzung nach irgendeinem der Ansprüche 1 bis 7, dadurch gekennzeichnet, daß das Lösungsmittel aprotisch ist.

9. Zusammensetzung nach Anspruch 8, dadurch gekennzeichnet, daß das Lösungsmittel ein Keton, Ester oder Kohlenwasserstoff ist.

10. Zusammensetzung nach irgendeinem der Ansprüche 1 bis 9, dadurch gekennzeichnet, daß sie im wesentlichen frei ist von Wasser.

11. Gegenstand, der wenigstens eine metallische, thermoplastische oder hölzerne Oberfläche aufweist, die konditioniert ist zur besseren Haftung mit Polyurethanbasis-Klebstoffen, wobei die Oberfläche darauf aufgebracht eine oberflächenkonditionierende Zusammensetzung aufweist, die umfaßt:
i) ein Material, ausgewählt aus Maleinsäure-modifizierten Estern von Kolophonium, Dialkylmalonaten oder aus Gemischen davon; und
ii) ein Polyisocyanat-Prepolymer, das mit dem Polyurethanbasis-Klebstoff sowohl kompatibel als auch funktionell reaktiv ist.

12. Gegenstand nach Anspruch 11, dadurch gekennzeichnet, daß die Maleinsäure-modifizierten Ester von Kolophonium ausgewählt sind aus Maleinsäure-modifiziertem Glycerinester von Kolophonium, Maleinsäure-modifiziertem Pentaerythritester von Kolophonium, Maleinsäure-modifiziertem Ethylenglycolester von Kolophonium, Maleinsäure-modifiziertem Mesitylenglycerinester von Kolophonium oder aus Gemischen davon.

13. Gegenstand nach Anspruch 11 oder Anspruch 12, dadurch gekennzeichnet, daß die Dialkylmalonate aus den C₁-C₁₀-Alkylestern der Malonsäure ausgewählt sind.

14. Gegenstand nach irgendeinem der Ansprüche 11 bis 13, dadurch gekennzeichnet, daß das Dialkylmalonat Diethylmalonat ist.

15. Gegenstand nach irgendeinem der Ansprüche 11 bis 14, dadurch gekennzeichnet, daß die oberflächenkonditionierende Zusammensetzung 5 bis 20 Gewichtsteile eines Maleinsäure-modifizierten Esters von Kolophonium und 2 bis 40 Gewichtsteile des Polyisocyanat-Prepolymeren umfaßt.

16. Gegenstand nach irgendeinem der Ansprüche 11 bis 15, dadurch gekennzeichnet, daß die oberflächenkonditionierende Zusammensetzung 0,1 bis 10 Gewichtsteile eines Dialkylmalonates und 2 bis 40 Gewichtsteile des Polyisocyanat-Prepolymeren umfaßt.

17. Verfahren zur Verbesserung der Haftung von Polyurethanbasis-Klebstoffzusammensetzungen an einem Substrat, das die Stufe des Aufbringens einer Haftvermittlerzusammensetzung auf die Substratoberfläche vor dem Aufbringen des Polyurethan-Klebstoffes umfaßt, wobei die Haftvermittlerzusammensetzung umfaßt:
i) einen Ester, ausgewählt aus Maleinsäure-modifizierten Estern von Kolophonium, Dialkylmalonaten oder aus Gemischen davon;
ii) ein Polyisocyanat-Prepolymer, das mit dem Polyurethanbasis-Klebstoff sowohl kompatibel als auch funktionell reaktiv ist; und
iii) einen Lösungsmittelträger, der gegenüber dem Prepolymer und dem Ester unreaktiv ist.

## Revendications

1. Une composition d'agent d'adhérence utile pour améliorer l'adhérence de compositions d'adhésif à base de polyuréthanne à des surfaces de substrats, ledit agent d'adhérence comprenant :
i) un ester choisi parmi les esters colophaniques à modification maléique, les malonates de dialkyle ou leurs mélanges ;
ii) un prépolymère polyisocyanate qui est à la fois compatible et fonctionnellement réactif avec l'adhésif à base de polyuréthanne ; et
iii) un véhicule qui est un solvant non réactif envers ledit prépolymère et ledit ester.

2. La composition telle que revendiquée dans la revendication 1, caractérisée en ce que l'ester colophanique est choisi parmi un ester colophanique de glycérol à modification maléique, un ester colophanique de pentaérythritol à modification maléique, un ester colophanique d'éthylène-glycol à modification maléique, un ester colophanique de mésitylène-glycérol à modification maléique ou leurs mélanges.

3. La composition telle que revendiquée dans la revendication 1 ou 2, caractérisée en ce que les esters colophaniques sont présents en des quantités de 5 % à 20 % en poids.

4. La composition telle que revendiquée dans l'une quelconque des revendications 1 à 3, caractérisée en ce que les malonates de dialkyle sont choisis parmi les esters d'alkyle en C₁-C₁₀ de l'acide malonique.

5. La composition telle que revendiquée dans l'une quelconque des revendications 1 à 4, caractérisée en ce que le malonate de dialkyle est présent en quantités de 0,1 % à 10 % en poids.

6. La composition telle que revendiquée dans la revendication 5, caractérisée en ce que le malonate de dialkyle est le malonate de diéthyle.

7. La composition telle que revendiquée dans l'une quelconque des revendications 1 à 6, caractérisée en ce que le prépolymère polyisocyanate a un poids moléculaire compris dans l'intervalle de 500 à 10 000.

8. La composition telle que revendiquée dans l'une quelconque des revendications 1 à 7, caractérisée en ce que le solvant est aprotique.

9. La composition telle que revendiquée dans la revendication 8, caractérisée en ce que le solvant est une cétone, un ester ou un hydrocarbure.

10. La composition telle que revendiquée dans l'une quelconque des revendications 1 à 9, caractérisée en ce qu'elle est sensiblement exempte d'eau.

11. Un article ayant au moins une surface métallique, thermoplastique ou en bois traitée pour offrir une meilleure adhérence à des adhésifs à base de polyuréthanne, ladite surface ayant reçu une application d'une composition de traitement de surface comprenant :
i) une matière choisie parmi les esters colophaniques à modification maléique, les malonates de dialkyle ou leurs mélanges ; et
ii) un prépolymère polyisocyanate qui est à la fois compatible et fonctionnellement réactif avec l'adhésif à base de polyuréthanne.

12. L'article tel que revendiqué dans la revendication 11, caractérisé en ce que les esters colophaniques à modification maléique sont choisis parmi un ester colophanique de glycérol à modification maléique, un ester colophanique de pentaérythritol à modification maléique, un ester colophanique d'éthylène-glycol à modification maléique, un ester colophanique de mésitylène-glycérol à modification maléique ou leurs mélanges.

13. L'article tel que revendiqué dans la revendication 11 ou 12, caractérisé en ce que les malonates de dialkyle sont choisis parmi les esters d'alkyle en C₁-C₁₀ de l'acide malonique.

14. L'article tel que revendiqué dans l'une quelconque des revendications 11 à 13, caractérisé en ce que le malonate de dialkyle est le malonate de diéthyle.

15. L'article tel que revendiqué dans l'une quelconque des revendications 11 à 14, caractérisé en ce que la composition de traitement de surface comprend 5 à 20 parties en poids d'un ester colophanique à modification maléique et 2 à 40 parties en poids du prépolymère polyisocyanate.

16. L'article tel que revendiqué dans l'une quelconque des revendications 11 à 15, caractérisé en ce que la composition de traitement de surface comprend 0,1 à 10 parties en poids d'un malonate de dialkyle et 2 à 40 parties en poids du prépolymère polyisocyanate.

17. Un procédé pour améliorer l'adhérence de compositions d'adhésif à base de polyuréthanne à un substrat, comprenant l'étape d'application d'une composition d'agent d'adhérence à ladite surface de substrat avant l'application dudit adhésif à base de polyuréthanne, ladite composition d'agent d'adhérence comprenant :
i) un ester choisi parmi les esters colophaniques à modification maléique, les malonates de dialkyle ou leurs mélanges ;
ii) un prépolymère polyisocyanate qui est à la fois compatible et fonctionnellement réactif avec l'adhésif à base de polyuréthanne ; et
iii) un véhicule qui est un solvant non réactif envers ledit prépolymère et ledit ester.
